Europäisches Patentamt

European Patent Office

Office européen des brevets

(11) Veröffentlichungsnummer: **0 192 662**

**B1**

(12) **EUROPÄISCHE PATENTSCHRIFT**

(45) Veröffentlichungstag der Patentschrift: **05.09.90**

(51) Int. Cl.⁵: **G 21 D 9/00**

(21) Anmeldenummer: **85903975.2**

(22) Anmeldetag: **23.08.85**

(86) Internationale Anmeldenummer:
**PCT/CH85/00123**

(87) Internationale Veröffentlichungsnummer:
**WO 86/01632 13.03.86 Gazette 86/06**

(54) **Verfahren für die passive Weitergabe von Wärme aus Kernreaktoren und Einrichtung zum Betrieb dieses Verfahren.**

(30) Priorität: **05.09.84 CH 4247/84**
**08.11.84 CH 5357/84**
**21.12.84 CH 6093/84**

(43) Veröffentlichungstag der Anmeldung:
**03.09.86 Patentblatt 86/36**

(45) Bekanntmachung des Hinweises auf die Patenterteilung:
**05.09.90 Patentblatt 90/36**

(84) Benannte Vertragsstaaten:
**AT BE CH DE FR GB IT LI LU NL SE**

(73) Patentinhaber: **VECSEY, Georg**
**Haselweg 7**
**CH-5200 Windisch (CH)**

(72) Erfinder: **DOROSZLAI, Pal, G., K.**
**Hirschengasse 21**
**CH-5416 Kirchdorf (CH)**
Erfinder: **Vécsey, Georg**
**Haselweg 7**
**CH-5200 Windisch (CH)**

(74) Vertreter: **White, William et al**
**Isler AG Patentanwalts-Bureau Walchestrasse 23**
**CH-8006 Zürich (CH)**

(56) Entgegenhaltungen:
**FR-A-2 283 523      FR-A-2 308 167**
**Kernenergie, Band 25, nr 1, Januar 1982, Akademieverlag, Berlin (DDR), J.Kuusi:"Technische und wirtschaftliche Probleme, Forschungsarbeit und Pläne für die Anwendung von Wärmereaktoren für Heizzwecke in Finnland", pages 14-18**
**IEEE Spectrum, Band 21, Nr 2, Februar 1984, New York, (US) J.Lerner:"Low-temperature reactors for space heating", pages 50-55**

Courier Press, Leamington Spa, England.

**Beschreibung**

Die vorliegende Erfindung betrifft ein Verfahren für die Erzeugung von Niedertemperaturwärme aus einem Kernreaktor, insbesondere für Heizzwecke gemäss dem Oberbegriff des Patentanspruchs 1.

Es sind Kernreaktoren bekannt, die in einem Wasserbecken betrieben werden. Die im Reaktor erzeugte Wärme wird dabei durch natürliche Zirkulation an Kühlelemente geleitet, welche sie an Abnehmer oder an die Umgebung abgeben. Einige dieser Reaktoren weisen einen grosen prompt negativen Neutronenabsorptions-Temperaturkoeffizienten auf. Dies bedeutet, dass die Herausnahme der neutronenabsorbierenden Regelstäbe nur eine begrenzte Leistungsexkursion zur Folge hat, da die Temperaturerhöhung die Kettenreaktion selbsttätig begrenzt.

Es sind Kernreaktoren bekannt, deren Leistung durch Veränderung des Gehaltes an neutronenabsorbierenden Lösungen des auch als Moderator wirkenden Kühlwassers geregelt wird.

Es sind Kernreaktoren bekannt, bei welchen die abgebrannten Brennelemente einzeln gehandhabt und nacheinander in Transportbehälter gesteckt werden, in welchen sie eine für den Transport hinreichend unterkritische Konfiguration bilden.

Es sind Kernreaktoren bekannt, bei welchen der Druckabfall über den mit forciertem Umlauf gekühltem Reaktorkern mit dem hydrostatischen Unterdruck unter einer mit Gas gefüllten Glocke solcherweise in Gleichgewicht steht, dass jede Störung der Kühlung zum Entweichen des Gases und zur Ueberflutung des Kerns mit neutronenabsorbierendem Beckenwasser führt.

Aus der FR—A—2 283 523 ist beispielsweise eine Einrichtung mit einem Pumpenkreislauf für den Betrieb eines Verfahrens mit einem einphasigen Kühlstrom bekannt. Diese Einrichtung, die daher nur mit Wasser ohne Dampf in diesem Kreislauf arbeitet, wird aktiv gekühlt, geregelt und abgestellt. Da sie Kontrollstäbe als Regelelemente aufweist, ist sie insbesondere im Hinblick auf die Sicherheit relativ aufwendig.

Bei einer solchen Einrichtung stellt sich daher das Problem, ein Verfahren zum Betrieb einer Einrichtung zu schaffen, die wenig aufwendig ist und dennoch mit grosser Sicherheit arbeitet.

Die Erfindung zeigt einen Weg, um zu einem Verfahren zur Erzeugung von Niedertemperaturwärme aus einem Reaktor zu gelangen, das mit einem geringen Aufwand realisiert werden kann. Dies wird erfindungsgemäss durch die im kennzeichnenden Teil des Anspruchs 1 angegebenen Massnahmen erreicht, und zwar unter Ausschaltung sämtlicher möglichen Quellen von Fehlmanipulation oder Komponentenfehler, welche zur Wärmeüberkapazität führen können, da die Notkühlung mit rein passiven Mitteln, ohne irgendeinen Eingriff möglich ist.

Vorteilhafte Ausgestaltungen der Erfindung sind in weiteren Ansprüchen angegeben.

Ausfuehrungsbeispiel

Die Erfindung wird nachfolgend in Ausführungsbeispielen anhand eines Zeichnung näher erläutert. Es zeigt:

Figur 1: einen Längsschnitt durch ein Wasserbecken mit einem darin untergebrachten Reaktor, den Komponenten eines Primärkreislaufes und den Verbindungsrohren eines Notkühlsystems für den Normalbetrieb,

Figur 2: einen Längsschnitt durch den Kondensator des Primärkreislaufes und durch den Mantelstrom zur Selbstreinigung des Primärkreislaufes zur Erläuterung der Leistungsregelung durch den Druckausgleichswasserpegel mittels Beckenwasserzufuhr zum Primärkreislauf,

Figur 3: einen Längsschnitt durch den Wärmetauscher zwischen dem Primärkreislauf und dem Mantelstrom mit Anordnung der elektrischen Heizung für den Anfahrbetrieb,

Figur 4: einen schematischen Längsschnitt durch den Reaktorkern und dessen Aufhängung in der Arbeitskonfiguration, angehoben durch Ueberproduktion von Dampf (oder für den Abtransport) und versenkt nach Ausklinken der Halterung nach Erschütterung,

Figur 5: einen Querschnitt durch den Reaktorkern in der Arbeitskonfiguration.

Figur 6: einen Querschnitt durch die Stützrohre mit der neutronenabsorbierenden Umhüllung und mit dem sich dazwischen bewegenden Stützgitter,

Figur 7: einen Längsschnitt durch den Reaktorkern in der Betriebskonfiguration mit einigen Konstruktionsdetails, einigen

Figur 8: einen Längsschnitt durch den Reaktor mit Hebevorrichtung, Schutzdeckel und Transportbehälter.

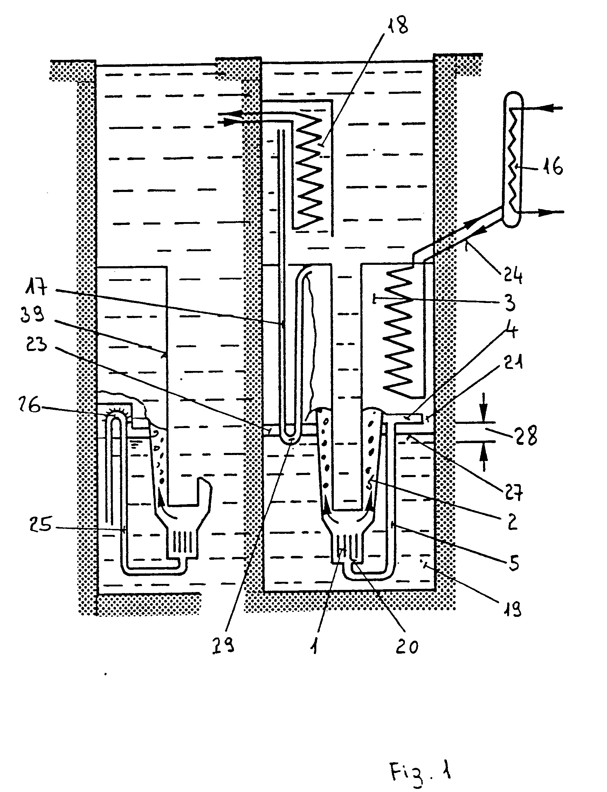

Das in Figur 1 dargestellte Reaktorsystem besteht aus einem tiefen mit borhaltigem Wasser gefüllten Becken 19, in dem der Kernreaktor 1 tief versunken ist. Das Kühlwasser steigt aus dem Plenum 20, durchströmt den Reaktorkern 1 und steigt im einem Ringkanal oder Diffuser 2 hoch. Der sinkende Druck des hochsteigenden Wassers lässt Dampf entstehen. Am oberen Ende des Ringkanals 2 werden Wasser und Dampf getrennt. Der Dampf steigt in den Kondensator 3 und gibt dort Nutzwärme ab. Der Wasseranteil und das hinunterfliessende Kondensat sammeln sich im Kondensatbehälter 4, aus welchem ein Rückflussrohr 5 zum Plenum 20 unter den Reaktorkern 1 führt. Der Unterschied des spezifischen Gewichts des Wasser-Damkpfgemisches im Ringkanal 2 einerseits und des Wassers in Rückflussrohr 5 andererseits erzeugt den Antrieb für den Kühlmittelkreislauf. Der Druck im Primärkühlkreislauf ist durch eine Ausgleichöffnung oder Verbindung 21 mit dem Wasserbecken ausgeglichen.

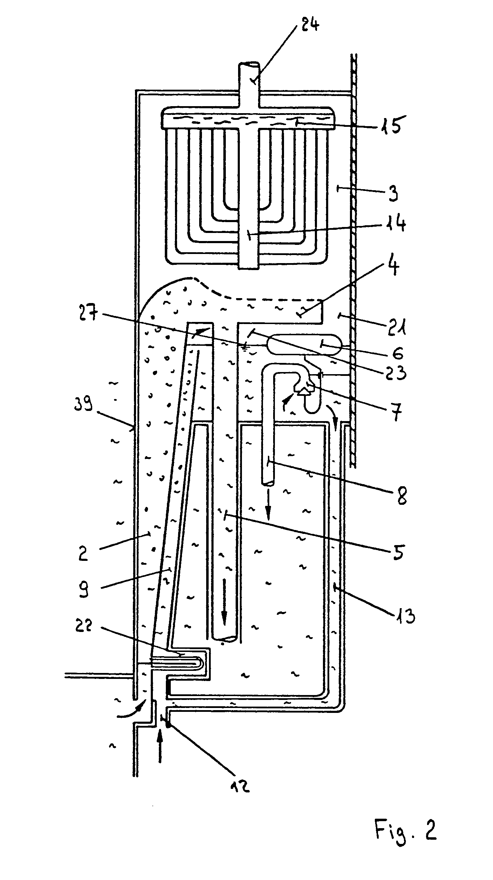

Die äussere Umhüllung des Ringkanals 2 und des Reaktorkerns 1 ist doppelwandig ausgebildet und nach aussen isoliert, wie Figur 2 zeigt. Der Raum 9 zwischen den zwei Wänden der Doppelwand ist unten gegen das Wasserbecken offen. Die aus dem Ringkanal 2 an den Zwischenraum 9 im Wärmeaustauscher 22 abgegebene Wärme führt zur Dampfbildung. Der hier entstehende Dampf wird durch die Verbindung 21 dem Kondensator 3 zugeführt. Ist im Primärkreislauf zuviel Wasser vorhanden, so führt dies zum Ueberlauf des Kondensatbehälter 4. Das überlaufende Wasser verlässt den Primärkreislauf über die Verbindung 21. Der Borgehalt dieses Ueberlaufes entspricht der mittleren Konzentration des Primärkreislaufes. Da der Dampf, der zusätzlich aus dem Beckenwasser erzeugt wird, borfrei, der Ueberlauf dagegen borhaltig ist, wird der Primärkreislauf laufend gereinigt, dessen Borgehalt nimmt laufend ab. Dies führt zur Erhöhung der Reaktivität und zur Zunahme der Reaktorleistung, bis die höheren Temperaturen des Reaktorkerns über den negativen Neutronenabsorptions-Temperaturkoeffizienten die Leistung stabilisieren. Da die Dampfzufuhr ständig erfolgt, steigt die Reaktorleistung ständig an, bis die erzeugte Dampfmenge im Kondensator nicht mehr abgeführt werden kann. Die Ueberproduktion vom Dampf, drückt das Wasserniveau durch die Verbindung 21 in die darunter befindliche Glocke 23 nach unten, bis der Schwimmkörper 6 auch sinkt und über das Ventil 7 und die Verbindungsleitung 8 den Weg für borhaltiges Beckenwasser zum Plenum 20 unter dem Reaktor freigibt. Die Zunahme des Borgehaltes vermindert die Reaktivität und damit die Reaktorleistung. Im stationären Betrieb halten sich Dampfzufuhr und Wasserzufuhr aus dem Wasserbecken zum Primärkreislauf die Waage. Aenderungen des Leistungsbedarfes führen zur Anpassung der im Kondensator 3 kondensierenden Dampfmenge. In solchen Fällen verschiebt sich das Gleichgewicht entweder zugunsten der zugeführten Dampfmenge oder zugunsten der Wassermenge, bis sich die erbrachte Leistung dem Bedarf angepasst hat.

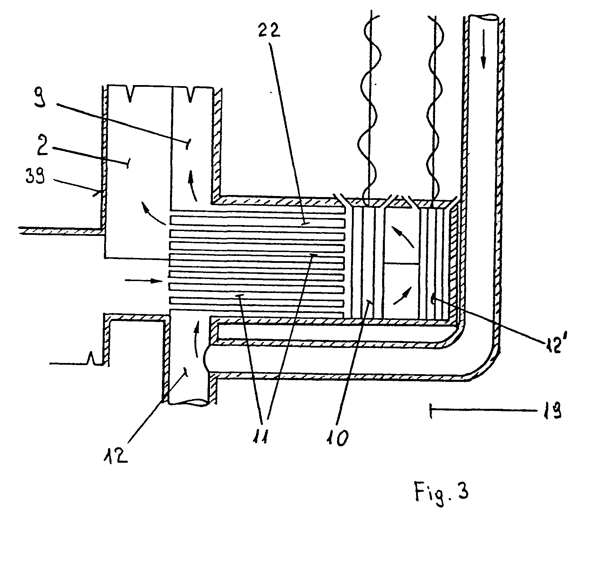

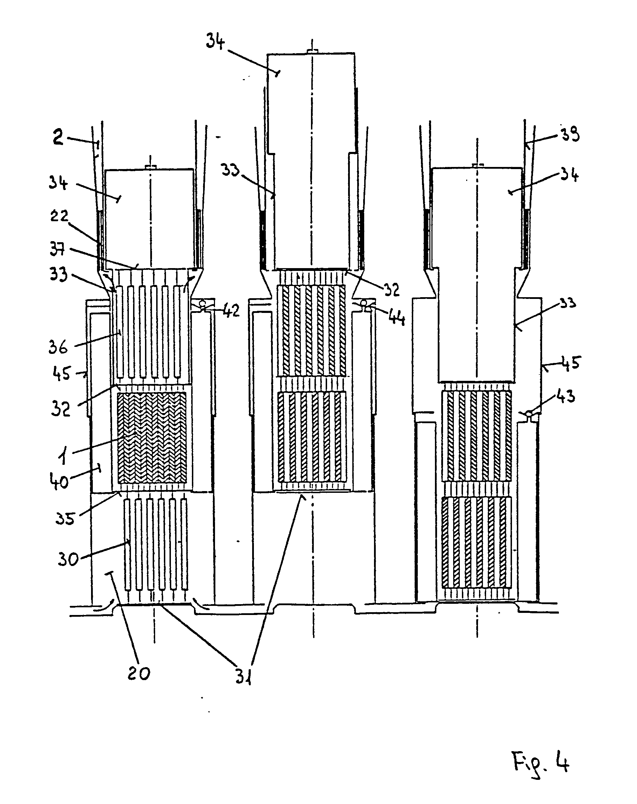

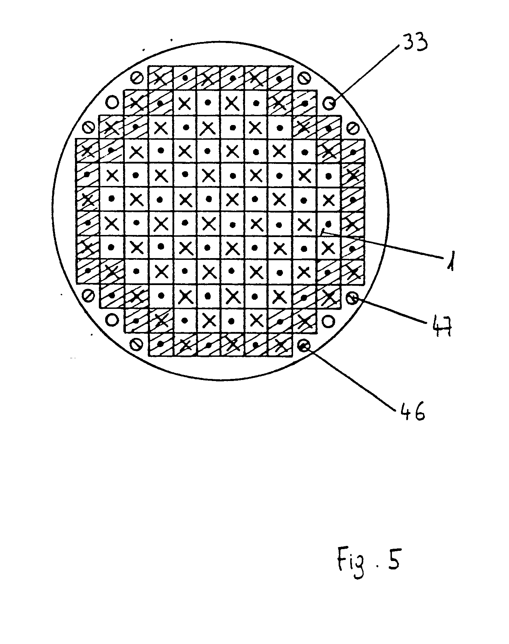

Einige Details des Wärmeaustauschers 22 zwischen dem hochsteigenden Heisswasser im Diffusor oder Ringraum 2 des Primärkreislaufes und dem Mantelstrom in der Doppelwand 9 des Ringraumes 2 sind in der Fig. 3 gezeigt. Das im Reaktorkern erwärmte Wasser tritt unten von links nach rechts in die Rohre 11 des Wärmeaustauschers 22, wird zum elektrischen Umwälzerhitzer 10 geführt, steigt zwischen dessen Stäben hoch und tritt oben von rechts nach links wieder in die Rohre 11 des Wärmeaustauschers 22, von wo aus es zum Ringraum 2 gelangt. Der elektrische Erhitzer 10 hat die Aufgabe, beim Anfahren den Primärkreis zu erhitzen und dessen Umwälzung zu starten. Das borhaltige Wasser strömt aus dem zum Wasserbecken 19 hin offenen Rohrstutzen 12 in den Wärmetauscher 22, hier zwischen den Rohren 11 um den Erhitzer 10 herum zu einem elektrischen Erhitzer 12', steigt zwischen dessen Stäben hoch, wird wieder um den Erhitzer 10 und zwischen den Rohren 11 des Wärmetauschers 22 geleitet bis es den Zwischenraum 9 erreicht, wo es hochsteigt und ausdampft. Der Dampfanteil des Mantelstromes wird im Glockenraum 23 (Fig. 2) vom Wasseranteil getrennt. Das borhaltige Wasser wird durch das Verbindungsrohr 13 zum Eintrittsrohrstutzen 12 zurückgeführt. Der elektrische Erhitzer 12' (Fig. 3) hat beim Anfahren die Aufgabe den Mantelstrom aufrechtzuerhalten und solange Dampf zu erzeugen, bis der Primärkreis hinreichend gereinigt und der Reaktor Wärme zu produzieren beginnt. Beide elektrischen Anfahrerhitzer 10 und 12' sind von oben herausziehbar in die entsprechenden Oeffnungen des Wärmetauschers 22 gesenkt. Die Abdichtung gegenüber dem Wasserbecken erfolgt durch ihr Gewicht.

Der Kondensator 3 besteht, wie aus Fig. 2 ersichtlich, aus vertikalen Rohren zwischen einem Wasserkollektor 14 und einen Dampfkollektor 15. In den vertikalen Rohren entsteht ein Wasser-Dampfgemisch, welcher zum Dampfkollektor 15 steigt. Der Wasseranteil wird von hier zum Wasserkollektor 14 zurückgeführt. Der Dampfanteil wird durch die Leitung 24 (Fig. 1) durch die Betonwand des Wasserbeckens zum Kondensator 16 geführt. In den U-Rohren dieses konventionellen Wärmetauschers 16 zirkuliert das Prozesswasser der Fernheizung. Der an der Aussenfläche dieser Rohre niederschlagende Dampf heizt das Prozesswasser. Das Kondensat wird zum Dampfkollektor 15 zurückgeführt, wo es sich mit dem Wasseranteil vermischt.

Alle Komponenten des Primärkreislaufes sind gegen das Beckenwasser thermisch isoliert. Damit die sich trotzdem ergebenden Wärmeverluste nicht zu einer übermässigen Erwärmung des Beckenwassers führen können, wird das aufsteigende, erwärmte Beckenwasser einem Beckenwasserkühler 18 (Fig. 1) zugeleitet. Der Beckenwasserkühler oder Wärmetauscher 18 ist unter oder einer nach unten offenen Glocke 23 untergebracht. Zusammen mit dem kalten Wassergehalt des Beckens 19 funktioniert er auch als Notkühler. Zu diesem Zweck verbindet die Dampfsiphonleitung 17 den oberen Teil des Kondensators 3 mit dem Notkühler 18. Das Verbindungsrohr 17 taucht zunächst unter dem freien Wasserspiegel 27 unter der Glocke 23.

Der Wasserspiegel 27 im nach unten offenen Raum unterhalb der Glocke 23 wird im Normalbetrieb durch die Leistungsregelung des Reaktors im Regelbereich 28 gehalten. Das Verbindungsrohr 17 taucht unter der unteren Grenze des Regelbereiches 28, so dass der Rohrkrümmer 29 im Normalbetrieb immer überflutet bleibt.

Andererseits ist das Plenum 20 unterhalb des Reaktors 1 mit einem Verbindungsrohr 25 mit dem Wasserbecken 19 verbunden. Dieses Verbindungsrohr 25 steigt zunächst in den Dampfraum unterhalb der Glocke 23 so hoch, dass der Rohrkrümmer 26 im Normalbetrieb immer oberhalb der oberen Grenze des Regelbereiches 28 des Wasserniveaus 27 zu liegen kommt.

Infolge Ueberproduktion von Dampf sinkt das Wasserniveau 27 und gibt den Weg durch das Verbindungsrohr 17 für den Dampf frei. Der Dampf entweicht aus dem Kondensator 3 in den Notkühler 18. Demzufolge sinkt der Druck im Kondensator 3 vom statischen, dem Wasserniveau 27 entsprechenden Wert auf den viel niedrigeren Wert, welcher im Notkühler besteht. Dadurch entsteht eine Saugwirkung, das Wasserniveau 27 steigt und das Beckenwasser strömt durch das Verbindungsrohr 12 und durch die Ausgleichsöffnung 21 in das Primärsystem.

Das ansteigende Wasserniveau 27 überflutet den Rohrkrümmer 26, so dass das Dampfpolster in diesem Krümmer 26 einerseits durch Kondensieren zum Verschwinden gebracht wird, andererseits wird sein Widerstand durch die Saugwirkung überwunden, so dass der direkte Weg des Beckenwassers durch das Verbindungsrohr 25 zum Plenum 20 unter dem Reaktor frei wird. Das einströmende borhaltige Beckenwasser stoppt die Wärmeerzeugung im Reaktor und trägt zusätzlich zur Kühlung bei. Der verbleibende, durch die Nachwärmeproduktion des Reaktors bedingte Dampf kondensiert im Notkühler 18 bis das im Kondensator 3 hochsteigende Wasser die Eintrittsöffnung des Verbindungsrohres 17 überflutet. Anschliessend stellt sich der Gleichgewichtszustand ein. Die Nachwärme des Kernreaktors 1 wird durch den kondensierenden Dampf an die Wände des Kondensators 3 und von hier aus als Kompensation für den Wärmeverlust der unvollständigen Isolation an das Beckenwasser übertragen. Gleichzeitig wird ein Teil der Wärmemenge direkt durch natürliche Zirkulation des Beckenwassers aus den Primärkreislauf getragen. Dabei strömt das Beckenwasser durch das rohr 25 in das Plenum 20 unter dem Reaktor 1, durchströmt und kühlt den Reaktor 1, steigt im Diffusor 2 in den Kondensator 3 und verlässt den Primärkreislauf durch die Druckausgleichsöffnungen 21, Verbindungsrohre 13 (Fig. 2) und Rohrstutzen 12.

Ein Kernreaktor der in den Figuren 1 bis 3 dargestellten Art funktioniert folgendermassen:

Der Kernreaktor meist einen stark negativen Neutronenabsorptions-Temperatur-koeffizienten auf und ist tief im Wasserbecken 19 versunken um brauchbare Sättigungs-Temperaturen zu erreichen. Der Kernreakator wird durch natürliche Konvektion einer thermisch gegenüber dem Wasserbecken verschlossenen Teilwassermenge gekühlt, wobei das weit über dem Reaktorkern aufsteigende erwärmte Wasser infolge abnehmenden Drucks der noch verbleibenden Wassersäule ausdampft. Der Dampfanteil wird von der Restwassermenge getrennt und im Kondensator die Nutzwärme an einen weiteren Kreislauf 24 abgegeben. Das Kondensat wird mit der Restwassermenge gemischt und in einem Behälter 4 gesammelt, um von hier aus zum Reaktorkern 1 zurückgeführt zu werden. Der Dampfraum um dem Kondensator 3 kommuniziert in einer nach unten offenen Glocke 23 mit dem Beckenwasser, um den Druckausgleich zwischen den Teilwassermengen des Primärkreislaufes und des Wasserbeckens solcherweise zu herzustellen, dass eine Mehr- oder Minderproduktion von Dampf zu entsprechenden Niveauschwankungen unter der Glocke 23 führen, die mittels durch den Schwimmkörper 6 selbsttätig geregelter Ventile 7 den Zufluss von gelösten Neutronenabsorber enthaltendem Beckenwasser zum Primärkreislauf verändern, wodurch die ständige Abnahme des Absorbergehaltes im Primärkreislauf kompensiert wird, die von der Zufuhr von durch Reaktorwärme und/oder eine elektrische Zusatzheizung aus dem Beckenwasser erzeugtem und dem Kondensator 3 zugeführten Dampf herrührt. Diese ständige, dem Wärmebedarf angepasste Aenderung des Absorbergehaltes im Primärkreislauf ändert, die Reaktivität, was wiederum zu einer durch den negativen Neutronenabsorptions-Temperatur-koeffizienten bestimmten Anpassung der Temperatur und der Reaktorleistung führt. Während der Regelvorgänge hat das Wasserniveau 27 einen bestimmten unteren und oberen Schwankungsbereich 28. Sinkt das Wasserniveau unter der unteren Grenze, so bedeutet dies, dass entweder die Regelung versagt oder die auszuregelnde Störung zu gross ist. In solchen Fällen kann in weitere Ausgestaltung des gestaltung Verfahrens die Notkühlung aktiviert werden. Gemäss der Erfindung geschieht dies mit passiven Mitteln, ohne irgend einen Eingriff. Ein Rohr führt vom oberen Teil der Dampfseite des Kondensators 3 nach unten, bis zu einem Krümmer 29, welcher sich unterhalb der unteren Grenze des Regelbereiches 28 befindet und von hier aus nach oben, wo es über einen Verteiler in das Poolwasser mündet. Ueber dem Verteiler ist eine weitere nach unten offene Glocke, die eine Kühlschlange enthält (Notkühler 18) angebracht. Diese als Thermosiphon ausgebildete Kühlschlange leitet die Wärme passiv an die Umgebung. Demzufolge ist im Normalbetrieb dieser Notkühler 18 immer mit Beckenwasser gefüllt, gleich wie das Rohrstück zwischen dem Rohrkrümmer 29 und dem Notkühlbehälter 18. Sinkt das Wasser eine infolge einer Störung bis unterhalb des Rohrkrümmers 29, so wird der Weg für den Dampf zum Notkühler 18 frei. Dies führt dazu, dass der Dampf aus dem Kondensatorraum entweicht und Beckenwasser in den Kondensator 3 hochsteigt. Hier wird es mit dem Primärkühlwasser gemischt und strömt durch das Fallrohr 5 dem Reaktor 1 zu. Da das Wasser im Primärkreislauf bei Normalbetrieb nahezu rein ist, das Beckenwasser dagegen eine relativ grösse Konzentration an gelösten Neutronenabsorbern aufweist, bewirkt das Zuführt von Beckenwasser neben der Kühlung auch das sichere Abstellen der Kettenreaktionen und der Wärmeerzeugung im Reaktorkern. In weiterer Ausgestaltung des Verfahrens kann es vorteilhaft sein, dem Beckenwasser zusätzlich einen Weg zum Reaktorkern 1 freizugeben. Dieser Weg soll jedoch im Normalbetrieb verschlossen bleiben, damit nicht unkontrolliert Beckenwasser dem Primärsystem beigemischt wird. Dies wird dadurch bewerkstelligt, dass ein weiteres Verbindungsrohr 25 zwischen dem Becken 19 und dem Plenum 20 unter dem Reaktor 1 zuerst nach oben, in den Dampfraum unterhalb des Kondensators geführt wird. Der Rohrkrümmer 26 im Dampfraum ist an der Aussenfläche berippt. Durch den kondensierenden Dampf wird durch diese berippte Fläche dem stillstehenden Beckenwasser im Rohr soviel Wärme zugeführt, dass dort durch Dampfbildung der hydrostatische Druck ausgeglichen wird. Dieses Dampfpolser im Rohrkrümmer trennt im Normalbetrieb das Beckenwasser vom Primärkreislauf. Wird die Notkühlung eingeleitet, so wird die berippte Fläche des Rohrkrümmers 26 vom steigenden Wasserspiegel überflutet, so dass der Dampf kondensiert. Andererseits überwindet die stärkere Saugwirkung die Sperrwirkung des Dampfpolsters, so dass der Weg für das Beckenwasser zum Reaktorkern frei wird.

Im Notkühlbetrieb wird die Wärmeerzeugung des Reaktors durch Zufuhr von Neutronen absorbierendem Wasser mittels des beschriebenen Rohrsystems selbsttätig unterbrochen. Die Wärmeabfuhrkapazität des Notkühlers 18 ist grösser als die Nachwärmeerzeugung des Reaktors 1. Im Notkühlbetrieb wird demzufolge das Wasserniveau im Kondensator 3 ansteigen, bis das Verbindungsrohr 17 zum Notkühler 18 überflutet und der Weg für die in diesem Zustand noch erzeugte Dampfmenge versperrt wird. Der Dampf sammelt sich im Kondensator 3, so dass der Wasserspiegel 27 wieder sinkt, bis sich ein Gleichgewichtszustand einstellt. Im gleichgewicht wird die Nachwärme einerseits durch Wärmeverluste im Kondensator andererseits durch natürliche Zirkulation des Beckenwassers durch den Reaktorkern abgeführt.

Aus dem Gleichgewichtszustand mit Nachwärmeabfuhr wird der Normalbetrieb wieder eingeleitet, indem der Primärkreislauf vom absorberhaltigen Wasser gereinigt wird. Dies geschieht durch Zufuhr von aus dem Beckenwasser erzeugtem Dampf zum Primärkreislauf.

Während des Anfahrvorganges kann sich eine natürliche Zirkulation des Primärkreises durch elektrische Heizung und Nachwärme einstellen. Der dabei erzeugter Dampf lässt den Wasserspiegel im Kondensator 3 absinken, bis die natürliche Zirkulation des Nachwärmeabfuhrbetriebes unterbrochen und auch das trennende Dampfpolster im Zufuhrrohr des Beckenwassers gebildet wird. Der zusätzlich aus Beckenwasser erzeugte Dampf wird dem Kondensator 3 zugeführt.

Damit nicht zuviel Dampf wieder zum Notkühlbetrieb geführt wird, muss im Kondensator 3 die Energie der elektrischen Heizung abgeführt werden. Die Einschaltung dieser Kühlung erfolgt erst dann, wenn das sinkende Wasserniveau sich der oberen Grenze der Wasserniveauregelung 28 nähert. Ausser der Kühlung wird in diesem Moment auch eine Feinregelung des Wasserniveaus eingeschaltet, welche auf die elektrische Leistung des Dampferzeugers wirkt. Auf diese Weise wird das Wasserniveau oberhalb des normalen Regelbereiches stabilisiert. Der damit erreichte Zustand wird solange aufrechterhalten, bis der Primärkreislauf vom Borgehalt hinreichend gereinigt ist und der Reaktor Wärme zu produzieren beginnt. Der von der Reaktorwärme produzierte Dampf lässt den Wasserspiegel in den Regelbereich 28 absinken, bis die normale regelung die Leistungsanpassung des Reaktors übernimmt. Die elektrische Leistung des Dampferzeugers wird durch die Feinregelung automatisch auf einen Restwert zurückgenommen, welcher im Normalbetrieb aufrechterhalten bleibt.

In weiterer Ausgestaltung des Verfahrens kann es vorteilhaft sein, dass im Kondensator 3 die Nutzwärme noch nicht direkt an das Prozesswasser, sondern zunächst an den Verdampferteil eines als geschlossenes System ausgebildeten Thermosiphons abgibt, dessen Kondensatorteil dann vom Prozesswasser gekühlt wird, womit zwischen Primärkreislauf und Prozesswasser ein hermetisch verschlossener Zwischenkreislauf geschaltet wird.

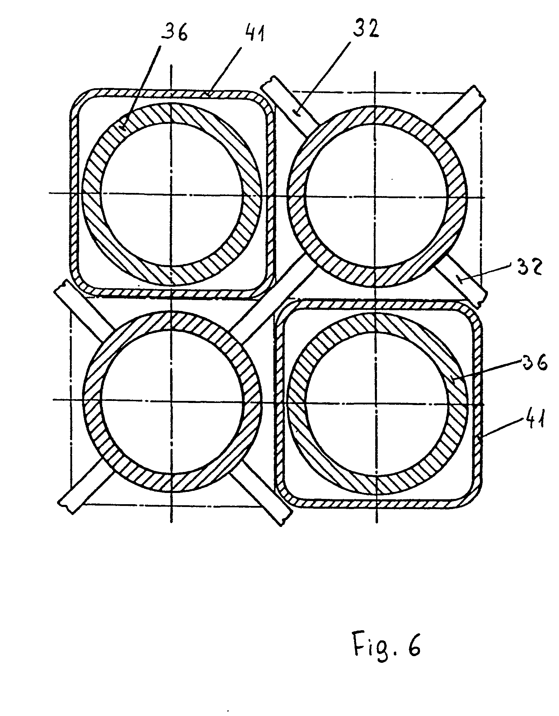

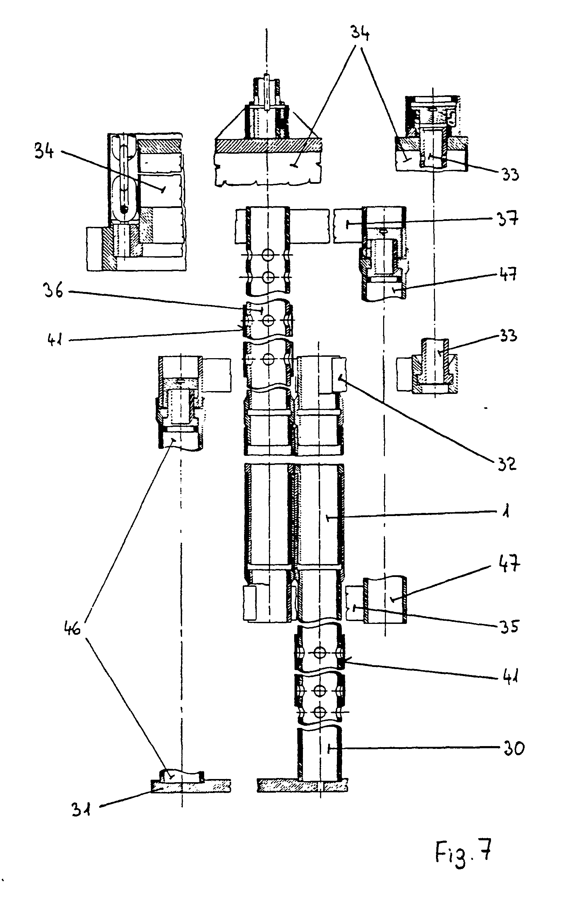

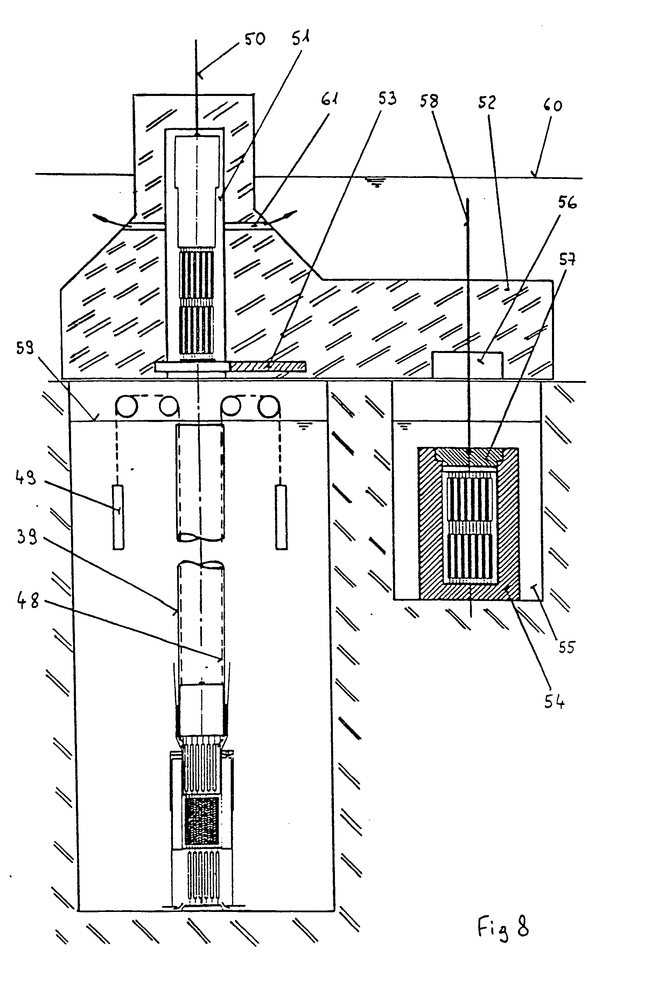

In der Fig. 4 ist weitere Anordnung des Reaktorkerns gezeigt. Das Kühlwasser des Primärkreises durchströmt vom Plenum 20 unterhalb des Kerns hochsteigend den Kern 1, den Wärmetauscher 22 und steigt im Ringraum 2 weiter. Jedes zweite Brennelement des Kernes 1 ist durch Stützrohren 30 nach unten mit einer Träger- oder Bodenplatte 31 verbunden. Dieselben Brennelemente werden von oben durch das Halterungsgitter 32 gehalten. Das Halterungsgitter 32 ist mit Verbindungsrohr 33 (Fig. 5) mit dem unteren Rand der Hebeglocke 34 verbunden. Die dazwischenliegenden Brennelemente des Kerns 1 sind von unten vom Stützgitter 35 gehalten und nach oben mit Halterungsrohren 36 mit einer Deckplatte oder einem Deckgitter 37 verbunden.

Links in der Fig. 4 ist der Reaktorkern in der Abeitskonfiguration dargestellt. Dabei ist der untere Rand der Hebeglocke 34 auf den Stützring 38 des zentralen Führungsrohres 39 abgestützt. Eine Gummidichtung verhindert die Mischung vom Poolwasser und Primärkreiswasser an dieser Stelle. Das Stützgitter 35 ruht auf dem Stützring der Ringglocke 40. Die Ringglocke 40 trägt das Gewicht des halben Reaktorkerns durch ihre Gasfüllung.

Die Brennelemente (Fig. 4) des Reaktorkerns sind abwechslungsweise durch Hängerohre mit einem Deckgitter 37 respektive durch Stützrohre mit einer Trägerplatte 31 verbunden, wobei sowohl die Hängerohre als auch die Stützrohre mindestens gleich lang den Brennelementen und mit neutronenabsorbierenden Materialien versehen sind, so dass bei Annäherung des Trägergitters an die Bodenplatte der Reaktorkern auseinandergeschoben und das neutronenabsorbierende Material zwischen den Brennelementen geschoben wird. Sind Trägergitter und Deckplatte solcherweise angenähert, so befinden sich je die Hälfte der Brennelemente der Reaktorkonfiguration in einer oberen respektive unteren Ebene. Dabei ist neutronenabsorbierendes Material zwischen den Brennelementen geschoben, wodurch eine hinreichend unterkritische Konfiguration entsteht.

Diejenigen Brennelemente, welche mit dem Deckgitter verbunden sind, sind von unten mit einem Stützgitter gehalten. Dieses Stützgitter ist mit Distanzhaltungselementen mit dem Deckgitter verbunden. Alle Brennelemente, welche mit der Trägerplatte verbunden sind, sind von oben durch ein Halterungsgitter gehalten. Diese Halterungsgitter sind einerseits mit Distanzhaltungselementen mit der Trägerplatte, andererseits mit Halterungselementen mit einer oberhalb der Deckplatte angebrachten Hebeglocke verbunden.

Wird die ganze Konfiguration durch eine Hebeglocke angehoben oder auf die Trägerplatte abgestellt, so sind und bleiben die Deckplatte und die Trägerplatte einander angenähert. Wird jedoch das Deckgitter aufgehängt und die Hebeglocke abgestützt, so wird das Deckgitter von Trägerplatte auf Distanz gezogen, wodurch die Betriebskonfiguration ensteht. Diese Konfiguration wird in beiden Fällen zerstört, wenn die Hebeglocke angehoben oder das Deckgitter abgesenkt wird. Im Sinne der Erfindung wird die Abstützung des Deckgitters durch einen Auslinkmechanismus aufegehoben, wobei das Auslinken bei Erschütterungen, wie Erdbeben verursacht wird.

Im Normalbetrieb wird im Reaktorkern 1 kein Dampf erzeugt. Die Dampfproduktion beginnt erst im Diffusor des Ringkanals 2. Entsteht aus irgendeinem Grunde trotzdem im Kern 1 Dampf, so steigt es zwischen den Halterungsrohren 36 und durch das Deckgitter 37 in die Hebeglocke 34. Wird soviel Dampf produziert, dass die Hebeglocke 34 gefüllt wird, so werden die mit der Hebeglocke 34 verbundenen Brennelemente zwischen die Halterungsrohre 36 gehoben, wie in der Mitte der Fig. 4 gezeigt. Gleichzeitig schieben sich die Halterungsrohre 30 zwischen den in ihrer Position verbleibenden übrigen Brennelemente. Die Halterungsrohre 30 und 36 sind mit Borstahlumhüllungen 41 (Fig. 6) maskiert.

Beim Anheben der Hebeglocke 34 muss das Halterungsgitter 32 zwischen den mit Borstahlumhüllungen 41 maskierten Halterungsrohren 36 hindurch gleiten. Dies ist in Fig. 6 gezeigt. Auf gleiche Art schieben sich die Halterungsrohre 30 durch das Stützgitter 35.

Die Ringglocke 40 ist nach unten offen. Die Gasfüllung wird durch flexible Verbindungsleitungen zugeführt. Am oberen Ende der Ringglocke wird eine Ventilöffnung 42 durch eine massive Stahlkugel 43 verschlossen. Bei starken Erschütterungen rollt diese Stahlkugel 43 von der Ventilöffnung 42, so dass das Gas aus der Ringglocke 40 entweicht und diese zusammen mit den darauf abgestützten Brennelementen absinkt. Bevor beim Absinken die untere, in der Fig. 4 rechts gezeigte Position erreicht wird, wird die Stahlkügel 43 durch den beweglichen Rückfuhrsteller 44, welcher am Rande des Umhüllungszylinders 45 hängen bleibt, in ihre ursprüngliche Position zurückgeführt und verschliesst die Ventiloeffnung 42 erneut.

Die Bodenplatte 31 ist mit dem Halterungsgitter 32 durch die untere Distanzhaltungsrohre 46 (Fig. 5) verbunden. Desgleichen ist das Stützgitter 35 mit dem Deckgitter 37 mit den oberen Distanzhaltungsrohre 47 verbunden. Weitere details der Verbindungen 33, 46 und 47 sind in Fig. 7 gezeigt.

Figur 8 zeigt zunächst den Reaktor in der Arbeitsposition mit dem Kettenzug 48 und die Gegengewichte 49, welche das Hochheben erleichtern. Wird der Reaktor hochgehoben, so kann die Hebeglocke 34 (Fig. 7) mit dem Hebewerkzeug 50 gekoppelt und der Reaktor weiter nach oben in die Nische 51 des Schutzdeckels 52 gebracht werden. In dieser Position wird der Reaktor durch das Schiebetor 53 gesichert. Der Schutzdeckel 52 wird seitlich über den Transportbehälter 54 geschoben, welcher in der Vertiefung 55 abgestellt ist. Nach Hinunterlassen des Reaktors in den Transportbehälter 54 wird die Hebeglocke 34 mit den Halterungsrohren 33 vom Reaktor gelöst und der Schutzdeckel 52 erneut verschoben, bis die Nische 56 mit dem Behälterdeckel 57 über den Transportbehälter positioniert ist. Der Deckel 57 wird mit dem Hebewerkzeug 58 auf den Transportbehälter 54 aufgesetzt und fixiert.

Während des Ladevorganges des Reaktors wird das Kühlmittelniveau vom Normalzustand 59 auf den Beladungsstand 60 gehoben. Dies ermöglicht die Kühlung des Reaktors durch natürliche Zirkulation durch die Oeffnungen 61 im Schutzdeckel.

Die wichtigsten Komponenten einer Einrichtung nach erfindung sind:

der Primärkreislauf, dessen Betriebsdruck durch die Höhe des darüberliegenden Beckenwassers gegeben ist und der als Thermosyphon selbsttätig die Umwälzung und die Reaktorkühlung sichert,

die Selbstreinigung des Primärkreislaufes mittels Destillation des mit löslichen Neutronen-Absorbern vergifteten Beckenwassers mittels Verlustwärme,

die Regelung der Reaktorleistung über den Druckausgleichs-Wasserpegel mittels Zufur von neutronenabsorbierendem Beckenwasser,

das Verbindungsrohr zwischen dem Kondensator und dem Notkühler, der als Dampf-Siphon funktionierend im Normalbetrieb durch den Wasserspiegel verschlossen bleibt, bei Ueberproduktion von Dampf jedoch zur Ueberflutung des Primärkreislaufes mit neutronenabsorbierenden Beckenwasser führt,

das für die Zuführ von Beckenwasser zum Reaktorkern als Siphon ausgebildete Rohr, das im Normalbetrieb durch ein selbsttätig sich bildenden Dampfpolster verschlossen bleibt,

die elektrische Heizung mit Dampfabschneider und Niveauregelung, wodurch die Reinigung des Primärkreislaufendes beim Anfahren erreicht wird,

der auseinanderschiebbare Reaktorkern, der als Ganzes eine für den Abtransport hinreichend unterkritische Konfiguration bildet,

die Aufhängung des auseinanderschiebbaren Reaktorkerns, wodurch sowohl bei Ueberproduktion von Dampf als auch bei starken Erschütterungen der Kern selbsttätig in die hinreichend unterkritische Transportkonfiguration übergeführt wird,

der verschiebbare Schutzdeckel über dem Reaktorbecken mit einer nach unten offenen Nische zur Aufnahme des Reaktors und żu dessen Ueberführen in den Transportbehälter.

**Patentansprüche**

1. Verfahren für die Erzeugung von Niedertemperaturwärme aus einem Kernreaktor, der in einem mit löslichen Neutronenabsorbern versetzten Wasserbecken versenkt ist, insbesondere für Heizzwecke, wobei

das Kühlwasser in einem vom übrigen Inhalt des Wasserbeckens (19) getrennten Primärkuhlsystem aus einem Plenum (20) unterhalb des Reaktorkerns (1) durch den Reaktor in eine Steigleitung (2) gelangt, wo der nach oben abnehmende hydrostatische Druck zur Dampfbildung führt, dadurch gekennzeichnet,

dass die Regelung der Reaktorleistung sowie die Notabschaltung und/oder der Einsatz der Notkühlung des Reaktors unter Verwendung von rein passiven Komponenten vom Kondensationsdruck und dem entsprechenden Wasserspiegel im Wasserbecken bewirkt werden.

2. Verfahren nach Patentanspruch 1, dadurch gekennzeichnet,

dass in einem Kondensator (3) am oberen Ende der Steigleitung (2) dem vom Wasser getrennten Dampfanteil Nutzwärme entzogen wird,

dass Kondensat und Wasseranteil vermischt, in einem Behälter (4) gesammelt und dem Plenum (20) zurückgeführt werden, um die natürliche Zirkulation im Primärkühlsystem aufrechtzuerhalten, und

dass der Druck zwischen dem Primärkühlsystem und dem Wasserbecken (19) solcherweise auf dem Niveau des Behälters (4) ausgeglichen wird, dass der Kondensationsdruck im Primärkühlsystem zu einem Gleichgewicht mit dem hydrostatischen Druck im Bereich des Wasserspiegels (27) des Wasserbeckens (19) strebt, indem zu diesem Zweck im Wasserbecken (19) gegenüber dem Dampfraum des Kondensators (3) ein Aenderungsbereich des Wasserspiegels vorgesehen ist.

3. Verfahren nach Patentanspruch 2, dadurch gekennzeichnet, dass die Regelung der Reaktorleistung durch Reaktivitätsänderungen erfolgt, die durch Veränderung des Gehaltes des im Kühlwasser gelösten Neutronenabsorbers bewerkstelligt werden, indem die Aenderung der Reaktivität derart durch den negativen Neutronenabsorptions-Temperaturkoeffizienten der Brennelemente kompensiert wird, dass bei veränderter Temperatur und Leistung sich ein neues Gleichgewicht einstellt.

4. Einrichtung zur Durchführung des Verfahrens nach Patentanspruch 3, dadurch gekennzeichnet, dass Verbindungsrohre (17) vorhanden sind, die vom oberen Teil des Dampfraumes des Kondensators (3) zuerst nach unten bis unterhalb des Bereichs des Wasserspiegels (27) geführt werden, und dann wieder nach oben, wo sie im kalten Backenwasser (18) münden, solcherweise, dass bei Ueberproduktion von Dampf dieser Dampf durch den kommunizierenden normalerweise mit Wasser gefüllten, unteren Rohrkrümmer (29) nach oben entweicht und dort kondensiert, wodurch der Druck im Kondensator (3) sinkt und Beckenwasser durch Ansteigen des Wasserspiegels (27) in den Kondensator (3) des Primärkreislaufes gesaugt wird, wobei das Kondensat sich dort mit dem Wasser des Primärkreislaufes vermischt und den Reaktorkern zugleich als Notkühlung kühlt, indem zusätzlich die Reaktivität im Reaktorkern durch den höheren Gehalt an gelöstem Neutronenabsorber stark vermindert wird, wodurch die Wärmeerzeugung im Reaktorkern unterbrochen wird.

5. Verfahren zum Betrieb einer Einrichtung Anspruch 4, dadurch gekennzeichnet, dass während des zusätzlichen Kühlvorganges, welcher der Ueberproduktion von Dampf folgt, Wasser aus dem Becken (19) über ein Zufuhrrohr (25), das einen an seiner Aussenfläche berippten Krümmer (26) aufweist, zuerst nach oben und dann nach unten zum Plenum (20) unter den Reaktorkern geführt wird, wobei der berippte Krümmer (26) einen Dampfraum unter dem Kondensator (3) erreicht, welcher Dampfraum vor der Einleitung des Notkühlvorganges immer mit Dampf gefüllt ist, derart, dass der sich an den Rippen niederschlagende Dampf den Rohrkrümmer (29) aufheizt, in dessen Inneren Dampf erzeugt wird, welcher das Beckenwasser (18) vom Wasserinhalt des Primärkreislaufes solange getrennt hält, bis die Saugwirkung nach Einleitung des Notkühlvorganges dessen hydrostatischen Druck überwindet und den Weg für das Beckenwasser (18) zum Reaktorkern freigibt, wobei nach Beruhigung des infolge des Notkühlvorganges im Kondensator hochsteigenden Wasserspiegels (27) und erneuter Schliessung des kommunizierenden Dampfverbindungsrohres (17) durch Ueberflutung dadurch eine Zusatzkühlung des Reaktorkerns entsteht, dass durch natürliche Zirkulation kaltes Beckenwasser weiterhin direkt zum Reaktorkern gelangt, dort erwärmt wird, in der Steigleitung (2) hochsteigt und durch Druckausgleichs-Verbindungen wieder aus dem Primärkreislauf (20, 1, 2, 3, 4, 5) austritt und zur Nachwärmeabfuhr beiträgt.

6. Verfahren nach Patentanspruch 5, dadurch gekennzeichnet, dass dem Primärkreislauf mit einer Anfahr-Heizung (10, 12') erzeugter Dampf zugeführt wird, um den Primärkreislauf aufzuheizen und umzuwälzen, bis der im Kondensator (3) sich ansammelnde Dampf den Wasserspiegel (27) im Primärkreislauf soweit absinken lässt, dass die natürliche Zirkulation des Beckenwassers durch den Reaktor unterbrochen wird und bis der Wassergehalt im Kühlkreislauf infolge Dampfzufuhr sich derart vom Absorbergehalt gereinigt hat, dass eine Leistungserzeugung im Kernreaktor starten und eine normale Regelung die Leistungsanpassung des Reaktors übernehmen kann.

7. Verfahren nach Patentanspruch 6, dadurch gekennzeichnet, dass beim Anfahren die Kühlung des Kondensators (3) erst dann gestartet wird, wenn der sinkende Wasserspiegel (27) sich von oben her einer Höhe nähert, die dem Normalbetrieb entspricht, wobei der Kondensator zumindest angenähert nur die Kühlung der Anfahr-Heiz-Leistung des Anfahr-Dampferzeugers übernimmt und die Feinregelung des Wasserspiegels durch Anpassung der Anfahr-Heiz-Leistung erfolgt, bis der Reaktor nach hinreichender Reinigung des Primärkreislaufes Wärme zu erzeugen beginnt, der weiter sinkende Wasserspiegel durch die Wirkung der Feinregelung die elektrische Leistung des Dampferzeugers auf einen dem Normalbetrieb entsprechenden Wert absinken lässt und die normale Reaktorregelung damit beginnt, die erzeugte Leistung dem Bedarf anzupassen.

8. Verfahren nach Patentanspruch 3, dadurch gekennzeichnet, dass zur Erhöhung der Reaktorleistung aus dem Beckenwasser Dampf erzeugt wird, der im Kondensator (3) des Primärkreislaufes kondensiert, wodurch der mittlere Gehalt an gelöstem Neutronenabsorber im Primärkreislauf verringert wird, und dass die Verringerung der Reaktorleistung durch Zufuhr vom Beckenwasser zum Primärkreislauf erfolgt, wobei im Normalbetrieb das Beckenwasser immer eine höhere Konzentration an gelöstem Neutronenabsorber als der Primärkreis aufweist.

9. Verfahren nach Patentanspruch 8, dadurch gekennzeichnet, dass die Dampferzeugung aus dem Beckenwasser durch Wärme aus dem Reaktorkern (1) erfolgt, indem Wärme aus dem Primärkreislauf für diesen Zweck benützt wird.

10. Verfahren nach Patentanspruch 8, dadurch gekennzeichnet, dass die Zufuhr des Beckenwassers zum Primärkreislauf selbsttätig geregelt wird.

11. Verfahren nach Patentanspruch 10, dadurch gekennzeichnet, dass die Zufuhr vom Beckenwasser zum Primärkreislauf derart geregelt wird, dass ein sich in der Druckausgleichverbindung (21) des Primärkreislaufes befindender Schwimmkörper (6) den Niveauänderungen des Wasserspiegels (27) folgt und über ein Ventil (7) und ein Verbindungsrohr (8) den Weg für das Beckenwasser zum Primärkreislauf freigibt, wobei der Einlauf an einer Stelle höherer Geschwindigkeit mit entsprechend niedrigem Druck erfolgt.

12. Verfahren nach Patentanspruch 10, dadurch gekennzeichnet, dass die Aenderungen des Relativdruckes zwischen dem Dampfraum des Kondensators (3) und dem umgebenden Beckenwasser durch eine Membran auf die Position eines Ventils übertragen werden, indem die Zufuhr des Beckenwassers über ein Verbindungsrohr zum Primärkreis geregelt wird.

13. Verfahren nach Patentanspruch 2, dadurch gekennzeichnet, dass die aus dem Kondensatorteil des Primärkreislaufes gewonnene Nutzwärme über einen Zwischenkreislauf dem Wärmetauscher des Prozesswassers des Wärmeverbrauchers zugeführt wird.

14. Verfahren nach Patentanspruch 13, dadurch gekennzeichnet, dass der Wärmetransport selbsttätig durch den als einen gekoppelten Sekundär-Thermosiphon ausgebildeten Zwischenkreislauf erfolgt, indem der Kondensator des Primärkreislaufes gleichzeitig als Verdampferteil des Sekundär-Thermosiphons konstruiert ist, wobei der erzeugte Dampf zu einem höher gelegenen Wärmetauscher (18) gelangt, dort kondensiert und Wärme an das Prozesswasser abgibt, und wobei das Kondensat zum Verdampfer zurückfliesst.

15. Einrichtung zum Betrieb des Verfahrens nach Patentanspruch 2, dadurch gekennzeichnet, dass ein sich im Mischbecken des Kondensates befindender Teil des Kondensators derart ausgestaltet ist, dass er durch direkte Nachkühlung des Gemisches zur Wärmeübertragung vom Primärkreis an den Sekundärekreis beiträgt.

16. Einrichtung zum Betrieb des Verfahrens nach Patentanspruch 2, dadurch gekennzeichnet, dass die Verlustwärme aus dem Beckenwasser mittels eines Thermosiphons (17) selbsttätig abgeführt und an die Umgebung abgegeben wird.

17. Einrichtung zum Betrieb des Verfahren nach Patentanspruch 2, dadurch gekennzeichnet, dass ein zweites Plenum vorhanden ist, derart, dass das Kühlmittel vom unteren Plenum in die Kernzone eintreten, den Kern durchströmen und in ein oberes Plenum oberhalb der Kernzone gelangen kann, und dass die Brennelemente des Kerns (1) abwechslungsweise durch das obere Plenum hindurch mit einer Deckplatte (37), respektive durch das untere Plenum hindurch mit einer Trägerplatte (31) verbunden sind, derart, dass bei einer Bewegung der Trägerplatte zur Deckplatte hin die Brennelemente auseinandergeschoben werden und die mit neutronenabsorbierenden Materialien versehenen Verbindungselemente zwischen den Brennelementen ein geschoben werden und gesamthaft eine hinreichend unterkritische Kernkonfiguration bilden.

18. Einrichtung nach Patentanspruch 17, dadurch gekennzeichnet, dass das Auseinanderschieben des Reaktorkerns durch Absinken der mit der oberen Deckplatte verbundenen Brennelemente durch ein Sicherungsorgan (42, 43) ausgelöst wird, das bei Erschütterungen nachgibt.

19. Einrichtung nach Patentanspruch 18, dadurch gekennzeichnet, dass gasgefüllte Schwimmkörper (6) vorhanden sind, die eine Halterung für Brennelemente bilden, derart, dass bei Oeffnung der Sicherungsorgane (42, 43) das Gas aus dem Schwimmkörper entweicht, und dass die Sicherungsorgane kreisförmige Ventilöffnungen (42) aufweisen, die mit massiven Kugeln (43) abgeschlossen sind, die bei Erschütterungen von selbst abrollen.

20. Einrichtung nach Patentanspruch 17, dadurch gekennzeichnet, dass eine mit der unteren Trägerplatte (31) verbundene Glocke (34) vorhanden ist, unter der sich Dampf unter Druck ansammeln kann, derart, dass bei Ueberdruck ein Auseinanderschieben des Reaktorkerns durch Anheben der unteren Trägerplatte (31) erfolgt.

21. Einrichtung nach Patentanspruch 17, dadurch gekennzeichnet, dass der Reaktor derart ausgestaltet ist, dss die untere Trägerplatte hochgezogen werden kann, um den Reaktorkern (1) in eine für den Transport hinreichend unterkritische Konfiguration zu bringen, ihn aus dem Becken zu heben und in einen Transportbehälter (54) hinunterzulassen, um ihn zwecks Auswechselns der Brennelemente an einen zentralen Ort zu transportieren.

22. Einrichtung nach Patentanspruch 21, dadurch gekennzeichnet, dass um den Reaktorkern in jeder Phase dieser Operationen den Sicherheitsanforderungen entsprechend vollständig gegen Einwirkungen von aussen geschützt zu halten, das Reaktorbecken mit einem verschiebbaren Schutzdeckel (52) versehen ist, in welchem sich eine von unten zugängliche Nische (51) befindet, derart, dass der Reaktor in diese Nische gehievt und zusammen mit dem Schutzdeckel seitlich über den Transportbehälter (54) geschoben werden kann, um dort den Reaktorkern herunterzulassen und den Deckel des Transportbehälters dann durch erneutes Schieben des Schutzdeckels in die ursprüngliche Lage zu bringen.

## Revendications

1. Procédé pour la production de chaleur à basse température à partir d'un réacteur nucléaire, qui est immergé dans un bassin d'eau mélangée avec des absorbeurs de neutrons solubles, en particulier dans un but de chauffage, dans lequel l'eau de refroidissement provenant d'un plénum (20) situé sous le coeur (1) du réacteur parvient dans un circuit de refroidissement primaire séparé du reste du contenu du bassin (19) en traversant le réacteur dans une conduite montante (2), où la pression hydrostatique diminuant de bas en haut conduit à la formation de vapeur, caractérisé en ce que

la régulation de la puissance du réacteur ainsi que l'arrête d'urgence et/ou le démarrage du refroidissement de secours du réacteur sont provoqués, en utilisant des composants absolument passifs, par la pression de condensation et par le niveau d'eau correspondant dans le bassin.

2. Procédé suivant la revendication 1, caractérisé en ce que:

dans un condenseur (3) situé à l'extrémité supérieure de la conduite montante (2), on soutire de la chaleur utile de la fraction de vapeur séparée de l'eau,

on mélange le condensat et la fraction d'eau, on les recueille dans un récipient (4) et on les renvoie au plénum (20) pour entretenir la circulation naturelle dans le circuit de refroidissement primaire,

on égalise la pression entre le circuit de refroidissement primaire et le bassin (19) au niveau du récipient (4) de telle manière que la pression de condensation dans le circuit de refroidissement primaire tend vers un équilibre avec la pression hydrostatique dans la région du niveau d'eau (27) du bassin (19), une zone de variation du niveau d'eau étant prévue à cet effet dans le bassin (19) en face de la chambre de vapeur du condenseur (3).

3. Procédé suivant la revendication 2, caractérisé en ce que la régulation de la puissance du réacteur est obtenue par des variations de la réactivité, qui sont réalisées par modification de la proportion d'absorbeur de neutrons soluble présente dans l'eau de refroidissement, la variation de la réactivité étant compensée par le coefficient de température négatif d'absorption des neutrons de l'élément combustible de telle façon qu'il s'établit un nouvel équilibre pour une température et une puissance modifiées.

4. Dispositif pour la mise en oeuvre du procédé suivant la revendication 3, caractérisé en ce qu'il est prévu des tubes de raccordement (17) qui sont conduits de la partie supérieure de la chambre de vapeur du condenseur (3) d'abord vers le bas jusque sous la région du niveau d'eau (27) et ensuite de nouveau vers le haut, où ils débouchent dans l'eau de bassin froide (18), de telle manière que, en cas de surproduction de vapeur, cette vapeur s'échappe vers le haut à travers le coude tubulaire inférieur (29) de communication, qui normalement est rempli d'eau, et s'y condense, ce qui fait baisser la pression dans le condenseur (3) et provoque l'aspiration d'eau de bassin dans le condenseur (3) du circuit primaire par montée du niveau d'eau (27), le condensat s'y mélangeant avec l'eau du circuit primaire et refroidissat s'y mélangeant avec l'eau du circuit primaire et refroidissant en même temps le coeur du réacteur en agissant comme refroidissement de secours, la réactivité dans le coeur du réacteur étant en outre fortement réduite par la haute teneur en absorbeur de neutrons dissous, ce qui interrompt la production de chaleur dans le coeur du réacteur.

5. Procédé de conduite d'un dispositif suivant la revendication 4, caractérisé en ce que, pendant l'opération de refroidissement supplémentaire, qui suit la surproduction de vapeur, de l'eau est conduite depuis le bassin (19) par un tube d'amenée (25) qui présente à sa surface extérieure un coude à ailettes (26), d'abord vers le haut et ensuite vers le bas en direction du plénum (20) sous le coeur du réacteur, le coude à ailettes (26) atteignant une chambre de vapeur située sous le condenseur (3), chambre de vapeur qui, avant le déclenchement de l'opération de refroidissement de secours, est toujours remplie de vapeur, de telle sorte que la vapeur se condensant sur les ailettes réchauffe le coude à aillettes (26) à l'intérieur duquel il se forme de la vapeur qui maintient l'eau de bassin (18) séparée du contenu d'eau du circuit primaire jusqu'à ce qu'après le déclenchement de l'opération de refroidissement de secours, l'effet d'aspiration dépasse sa pression hydrostatique et libère le chemin de l'eau de bassin (18) vers le coeur du réacteur, ce qui, après calmage du niveau d'eau (27) s'élevant dans le condenseur par suite de l'opération de refroidissement de secours et nouvelle fermeture par noyage du tube de raccordement de vapeur (17) de communication, provoque un refroidissement supplémentaire du coeur du réacteur par le fait que de l'eau de bassin froide arrive directement au coeur du réacteur par circulation naturelle, s'y réchauffe, monte dans la conduite montante (2) et, par des canalisations d'équilibrage de pression, sort à nouveau du circuit primaire (20, 1, 2, 3, 4, 5) et contribue à l'évacuation de chaleur.

6. Procédé suivant la revendication 5, caractérisé en ce que l'on fournit au circuit primaire de la vapeur produite avec un chauffage de démarrage (10, 12'), pour échauffer et purger le circuit primaire, jusqu'à ce que la vapeur s'accumulant dans le condenseur (3) fasse baisser le niveau d'eau (27) dans le circuit primaire au point que la circulation naturelle de l'eau de bassin à travers le réacteur soit interrompue et jusqu'à ce que l'eau contenue dans le circuit de refroidissement se soit épurée de son contenu d'absorbeur par addition de vapeur de sorte qu'une production de puissance puisse démarrer dans le réacteur nucléaire et qu'une régulation normale puisse prendre en charge l'adaptation de la puissance du réacteur.

7. Procédé suivant la revendication 6, caractérisé en ce qu'au démarrage, le refroidissement du condenseur (3) n'est mis en route que lorsque le niveau d'eau (27) descendant s'approche par le haut d'une hauteur qui correspond à la marche normale, le condenseur n'assurant au moins approximativement que le refroidissement de la puissance de chauffage de démarrage du générateur de vapeur de démarrage et la régulation fine du niveau d'eau étant réalisée par une adaptation de la puissance de chauffage de démarrage, jusqu'à ce que le réacteur, après épuration suffisante du circuit primaire, commence à produire de la chaleur, que le niveau d'eau encore descendant fasse descendre, par l'action de la régulation fine, la puissance électrique du générateur de vapeur à une valeur correspondant à la marche normale et que la régulation normale du réacteur commence ainsi à adapter la puissance produite à la demande.

8. Procédé suivant la revendication 3, caractérisé en ce que, pour augmenter la puisance du réacteur, on produit à partir de l'eau de bassin de la vapeur qui se condense dans le condenseur (3) du circuit primaire, ce qui fait diminuer la teneur moyenne en absorbeur de neutrons dissous dans le circuit primaire, et en ce que la diminution de la puissance du réacteur est obtenue par addition d'eau de bassin au circuit primaire, l'eau de bassin ayant en marche normale une concentration en absorbeur de neutrons dissous toujours plus élevée que le circuit primaire.

9. Procédé suivant la revendication 8, caractérisé en ce que la production de vapeur à partir de l'eau de bassin est réalisée au moyen de chaleur provenant du coeur du réacteur (1), et on utilise à cette fin la chaleur provenant du circuit primaire.

10. Procédé suivant la revendication 8, caractérisé en ce que l'addition d'eau de bassin au circuit primaire est régulée automatiquement.

11. Procédé suivant la revendication 10, caractérisé en ce que l'addition d'eau de bassin au circuit primaire est régulée de telle façon qu'un flotteur (6) se trouvant dans la communication d'équilibrage de pression (21) du circuit primaire suit les variations de hauteur du niveau d'eau (27) et, par une soupape (7) et un tube de liaison (8), libère la voie pour l'eau de bassin vers le circuit primaire, l'entrée se produisant en un endroit de haute vitesse avec une pression proportionellement basse.

12. Procédé suivant la revendication 10, caractérisé en ce que les variations de la pression relative entre la chambre de vapeur de condenseur (3) et l'eau de bassin environnante sont transmises par une membrane à la position d'une soupape, avec une régulation de l'addition d'eau de bassin au circuit primaire par un tube de liaison.

13. Procédé suivant la revendication 2, caractérisé en ce que la chaleur utile tirée du condenseur du circuit primaire est transmise par un circuit intermédiaire à l'échangeur de chaleur de l'eau de travail de consommateur de la chaleur.

14. Procédé suivant la revendication 13, caractérisé en ce que le transfert de la chaleur est réalisé automatiquement par le circuit intermédiaire ayant la forme d'un thermosiphon secondaire couplé, où le condenseur du circuit primaire est en même temps construit comme partie évaporateur du thermosiphon secondaire, la vapeur produite gagnant un échangeur de chaleur (18) situé plus haut, s'y condensant et cédant de la chaleur à l'eau de travail, et le condensat retournant à l'évaporateur.

15. Dispositif pour la mise en oeuvre du procédé suivant la revendication 2, caractérisé en ce qu'une partie du condenseur se trouvant dans le bassin de mélange du condensat a une configuration telle qu'elle contribue, par refroidissement ultérieur direct du mélange, au transfert de chaleur du circuit primaire au circuit secondaire.

16. Dispositif pour la mise en oeuvre du procédé suivant la revendication 2, caractérisé en ce que la chaleur perdue par l'eau de bassin est évacué automatiquement au moyen d'un thermosiphon (17) et est restituée à l'atmosphère.

17. Dispositif pour la mise en oeuvre du procédé suivant la revendication 2, caractérisé en ce qu'il est prévu un second plénum, de telle sorte que l'agent de refroidissement provenant du plénum inférieur puisse pénétrer dans la zone du coeur, circuler à travers le coeur et parvenir dans un plénum supérieur situé au-dessus de la zone du coeur, et en ce que les éléments combustibles du coeur (1) sont raccordés alternativement à travers le plenum supérieur à une plaque de couverture (37), respectivement à travers le plénum inférieur à une plaque de support (31), de sorte que, lors d'un mouvement de la plaque de support en direction de la plaque de couverture, les éléments combustibles coulissent les uns hors des autres et que les éléments de raccordement pourvus de matériaux d'absorption des neutrons coulissent entre les éléments combustibles et forment ensemble une configuration de coeur suffisamment sous-critique.

18. Dispositif suivant la revendication 17, caractérisé en ce que la séparation coulissante du coeur du réacteur par abaissement des éléments combustibles raccordés à la plaque de couverture est déclenchée par un organe de sécurité (42, 43) qui cède en cas de secousses.

19. Dispositif suivant la revendication 18, caractérisé en ce qu'il est prévu des flotteurs (6) remplis de gaz, qui forment un support pour les éléments combustibles, de sorte que lors de l'ouverture des organes de sécurité (42, 43) le gaz s'échappe hors du flotteur, et que les organes de sécurité présentent des ouvertures de soupape (42) circulaires qui sont obturées par des billes massives (43) qui s'écartent automatiquement en roulant en cas de secousses.

20. Dispositif suivant la revendication 17, caractérisé en ce qu'il est prévu une cloche (34) raccordée à la plaque de support inférieure (31), cloche sous laquelle la vapeur sous pression peut s'accumuler de sorte qu'en cas de surpression, il se produit une séparation coulissante du coeur du réacteur par soulèvement de la plaque de support inférieur (31).

21. Dispositif suivant la revendication 17, caractérisé en ce que le réacteur est constitué de telle façon que la plaque de support inférieure peut être soulevée haut, pour amener le coeur du réacteur (1) dans une configuration suffisamment sous-critique pour le transport, pour le soulever hors du bassin et le déposer dans un recipient de transport (54), afin de le transporter en un endroit central pour le remplacement des éléments combustibles.

22. Dispositif suivant la revendication 21, caractérisé en ce que, pour assurer au coeur du réacteur dans chaque phase de ces opérations une protection contre les effets extérieurs qui soit entièrement conforme aux prescriptions de sécurité, le bassin du réacteur est pourvu d'un couvercle de protection (52) coulissant dans lequel se trouve une niche (51) accessible par le bas de sorte que le réacteur puisse être hissé dans cette niche et glissé latéralement avec le couvercle de protection au-dessus du récipient de transport, pour y faire descendre le coeur du réacteur et amener le couvercle du récipient de transport dans sa position initiale par un nouveau glissement du couvercle de protection.

**Claims**

1. Process for the generation of low-temperature heat from a nuclear reactor, which is sunken in a water pool mixed with soluble neutron absorbers, in particular for heating purposes, in which process the cooling water in a primary coolant system, separate from the remaining content of the water pool (19), passes from a plenum (20) underneath the reactor core (1) through the reactor into a riser (2), where the upwardly decreasing hydrostatic pressure leads to the formation of steam, characterized in that the control of the reactor power and the emergency shutdown and/or the operation of the emergency cooling of the reactor are accomplished using purely passive components of the condensation pressure and the corresponding water level in the water pool.

2. Process according to Patent Claim 1, characterized in that, in a condenser (3) at the upper end of the riser (2), useful heat is extracted from the steam fraction separate from the water, in that condensate and water fraction are mixed, collected in a tank (4) and returned to the plenum (20), in order to maintain the natural circulation in the primary coolant system, and in that the pressure between the primary coolant system and the water pool (19) is balanced at the level of the tank (4) in such a way that the condensation pressure in the primary coolant system tries to reach an equilibrium with the hydrostatic pressure in the region of the water level (27) of the water pool (19), by a variation region of the water level being provided for this purpose in the water pool (19) opposite the vaporous space of the condenser (3).

3. Process according to Patent Claim 2, characterized in that the control of the reactor power takes place through reactivity variations, which are brought about through changing the content of the neutron absorber dissolved in the cooling water by the variation in reactivity being compensated by the negative neutron absorption temperature coefficient of the fuel elements in such a way that a new equilibrium is obtained at the changed temperature and power.

4. Arrangement for carrying out the process according to Patent Claim 3, characterized in that there are connecting pipes (17), which lead from the upper part of the vaporous space of the condenser (3) firstly downwards to underneath the region of the water level (27), and then again upwards, where they open out in the cold pool water (18), in such a way that, if there is an overproduction of steam, this steam escapes upwards through the communicating lower pipe elbow (29), normally filled with water, and condenses there, as a result of which the pressure in the condenser (3) drops and pool water is sucked into the condenser (3) of the primary coolant circuit due to rising of the water level (27), the condensate mixing there with the water of the primary coolant circuit and at the same time cooling the reactor core as emergency cooling by, in addition, the reactivity in the reactor core being greatly reduced by the higher content of dissolved neutron absorber, as a result of which the heat generation in the reactor core is interrupted.

5. Process for operating an arrangement according to Claim 4, characterized in that, during the additional cooling operation which follows the overproduction of steam, water is led out of the pool (19) via a feeder pipe (25), which has an elbow (26) which is ribbed on its outside surface, firstly upwards and then downwards to the plenum (20) underneath the reactor core, the ribbed elbow (26) reaching a vapour space underneath the condenser (3), which vapour space is always filled with steam before the initiation of the emergency cooling operation in such a way that the steam precipitating on the ribs heats up the pipe elbow (29), inside which steam is generated which keeps the pool water (18) separate from the water content of the primary circuit until the suction effect after initiation of the emergency cooling operation overcomes its hydrostatic pressure and frees the way for the pool water (18) to the reactor core, in which process, after settling of the water level (27), rising in the condenser due to the emergency cooling operation, and renewed closing of the communicating steam connecting pipe (17) by flooding, an additional cooling of the reactor core occurs by cold pool water continuing to pass directly to the reactor core by natural circulation, where it is warmed, rises in the riser (2) and leaves the primary circuit (20, 1, 2, 3, 4, 5) again through pressure equalization connections and contributes to afterheat removal.

6. Process according to Patent Claim 5, characterized in that the primary circuit is fed steam generated by a start-up heater (10, 12'), in order to heat up and circulate the primary circuit, until the steam accumulating in the condenser (3) causes the water level (27) in the primary circuit to drop to the extent that the natural circulation of the pool water through the reactor is interrupted and until the water content in the coolant circuit has purged itself of absorber content by way of steam supply, in such a way that power generation can start in the nuclear reactor and a normal control of the power adaptation of the reactor can take over.

7. Process according to Patent Claim 6, characterized in that, during starting-up, the cooling of the condenser (3) is not started until the dropping water level (27) approaches from above a level which corresponds to normal operation, in which process the condenser takes over, at least in approximation, only the cooling of the start-up heating output of the start-up steam generator and the fine control of the water level takes place by adaptation of the start-up heating output, until the reactor begins to generate heat after adequate purging of the primary circuit, the further dropping water level causes the electrical output of the steam generator to drop to a value corresponding to normal operation, due to the effect of the fine control, and the normal reactor control begins to adapt the generated power to requirements.

8. Process according to Patent Claim 3, characterized in that, to increase the reactor power, steam is generated from the pool water, which steam condenses ion the condenser (3) of the primary circuit, as a result of which the average content of dissolved neutron absorber in the primary circuit is reduced, and in that the reduction in reactor power takes place by supplying pool water to the primary circuit, the pool water always having a higher concentration of dissolved neutron absorber than the primary circuit in normal operation.

9. Process according to Patent Claim 8, characterized in that the steam generation from the pool water takes place by heat from the reactor core (1), by heat from the primary circuit being used for this purpose.

10. Process according to Patent Claim 8, characterized in that the supply of pool water to the primary circuit is automatically controlled.

11. Process according to Patent Claim 10, characterized in that the supply of pool water to the primary circuit is controlled in such a way that a float (6), located in the pressure-equalization connection (21) of the primary circuit, follows the level variations of the water level (27) and, via a valve (7) and a connecting pipe (8), frees the way for the pool water to the primary circuit, the inflow taking place at a point of higher velocity with corresponding low pressure.

12. Process according to Patent Claim 10, characterized in that the variations in the relative pressure between the vapour space of the condenser (3) and the surrounding pool water are transferred through a diaphragm to the position of a valve, by the supply of pool water being controlled via a connecting pipe to the primary circuit.

13. Process according to Patent Claim 2, characterized in that the useful heat obtained from the condenser part of the primary circuit is fed via an intermediate circuit to the heat exchanger of the process water of the heat consumer.

14. Process according to Patent Claim 13, characterized in that the heat transport takes place automatically through the intermediate circuit, designed as a coupled secondary thermosiphon, by the condenser of the primary circuit being designed at the same time as the evaporator part of the secondary thermosiphon, the generated steam passing to a heat exchanger (18) at a higher level, where it condenses and gives off heat to the process water, and the condensate flowing back to the evaporator.

15. Arrangement for the operation of the process according to Patent Claim 2, characterized in that a part of the condenser, located in the mixing pool of the condensate, is designed in such a way that, through direct aftercooling of the mixture, it contributes to the heat transfer from the primary circuit to the secondary circuit.

16. Arrangement for the operation of the process according to Patent Claim 2, characterized in that the lost heat from the pool water is automatically removed by means of a thermosiphon (17) and given off to the surroundings.

17. Arrangement for the operation of the process according to Patent Claim 2, characterized in that there is a second plenum, such that the coolant from the lower plenum can enter the core zone, flow through the core and pass into an upper plenum above the core zone, and in that the fuel elements of the core (1) are alternately connected through the upper plenum to a cover plate (37) and respectively through the lower plenum to a support plate (31), in such a way that, if there is a movement of the support plate towards the cover plate, the fuel elements are pushed apart and the connecting elements provided with neutron-absorbing materials are pushed between the fuel elements and together form an adequately subcritical core configuration.

18. Arrangement according to Patent Claim 17, characterized in that the pushing-apart of the reactor core through dropping of the fuel elements connected to the upper cover plate is triggered by a safety member (42, 43), which yields under vibrations.

19. Arrangement according to Patent Claim 18, characterized in that there are gas-filled floats (6), which form a holder for fuel elements, such that, on opening of the safety members (42, 43), the gas escapes from the float, and that the safety members have circular valve openings (42), which are closed off by solid balls (43), which roll away of their own accord under vibrations.

20. Arrangement according to Patent Claim 17, characterized in that there is a bell (34), which is connected to the lower support plate (31) and under which steam can accumulate under pressure in such a way that, if there is overpressure, a pushing-apart of the reactor core takes place through raising of the lower support plate (31).

21. Arrangement according to Patent Claim 17, characterized in that the reactor is designed in such a way that the lower support plate can be drawn up in order to bring the reactor core (1) into a configuration which is adequately subcritical for transportation, to lift it out of the pool and let it down into a shipping cask (54), in order to transport it to a central location for the purpose of changing the fuel elements.

22. Arrangement according to Patent Claim 21, characterized in that, in order to protect the reactor core in every phase of these operations completely against external effects in conformity with safety requirements, the reactor pool is provided with a closable protective cover (52), in which there is a located a niche (51), accessible from below, in such a way that the reactor can be hoisted into this niche and pushed together with the protective cover sideways over the shipping cask (54), in order to let the reactor core down there and then bring the cover of the shipping cask into the original position through renewed sliding of the protective cover.

Fig. 1

Fig. 2

Fig. 3

Fig. 4

Fig. 5

Fig. 6

Fig. 7

Fig 8